# EUROPEAN PATENT SPECIFICATION

(11) **EP 1 610 208 B1**
(45) Date of publication and mention of the grant of the patent: **15.08.2007**
(21) Application number: 05013512.8
(22) Date of filing: 22.06.2005
(51) Int. Cl.: G06F 3/02

(54) **Key interface apparatus for easy key input and electronic device adaptable to the use thereof**
Eingabetastatur mit vereinfachter Eingabe von Nummern und entsprechendes elektronisches Gerät
Appareil d'entrée à touches pour entrer des numéros plus facilement et un dispositif électronique correspondant

(30) Priority: 22.06.2004 KR 2004046782
(43) Date of publication of application: 28.12.2005
(73) Proprietor: SAMSUNG ELECTRONICS CO., LTD., Suwon-si, Gyeonggi-do (KR)
(72) Inventor: Moon, Jeong-Kyu, Yeongtong-gu Suwon-si Gyeonggi-do (KR); Hong, Jun-Il, Yeongtong-gu Suwon-si Gyeonggi-do (KR)
(74) Representative: Grünecker, Kinkeldey, Stockmair & Schwanhäusser Anwaltssozietät

(56) References cited:
- ANONYMOUS: "Get to know your Keyboard" INTERNET ARTICLE, [Online] XP002343571 Retrieved from the Internet: URL:http://www.btinternet.com/~bill.furnel l/QWERTY.jpg>
- PATENT ABSTRACTS OF JAPAN vol. 1998, no. 13, 30 November 1998 (1998-11-30) & JP 10 207596 A (TARAMA MITSUO), 7 August 1998 (1998-08-07)

## Description

The present invention relates to a portable terminal, and more particularly to a key interface apparatus having a QWERTY keyboard for easy input of numerals or any arbitrarily-set characters, and a portable terminal adapting the same.

In general, a portable terminal refers to a portable apparatus capable of providing a user with a wireless communication service while performing wireless communication with a base station. Such a portable terminal is now commonly used by all kinds of people throughout the world, and is recognized by some people as a nearly indispensable commodity which must always be carried. The portable terminal includes a transceiver unit, data input/output units, and an antenna device to transmit/receive audio or video data signals to/from a partner.

Some recent portable terminals have a small QWERTY keyboard installed thereon for easier input of characters. The keys of the QWERTY keyboard are used to input characters in a character input mode and numerals in a numeral input mode, respectively. The QWERTY keyboard replaces a conventional 3x4 key interface for numeral and character input, and is typically positioned on a surface of the portable terminal.

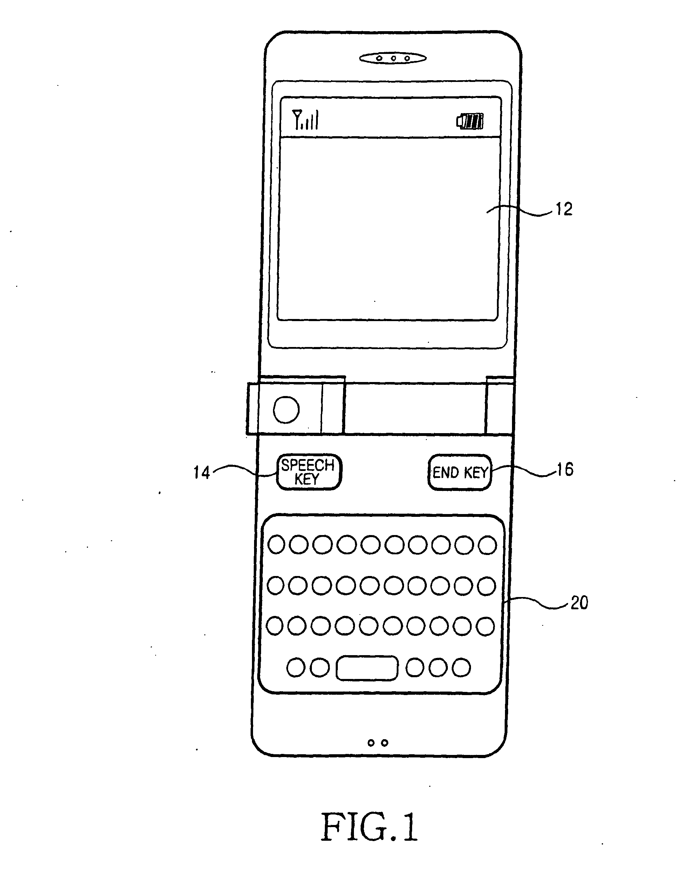

FIG. 1 shows a conventional portable terminal having a QWERTY keyboard.

As shown in the drawing, the portable terminal includes a screen 12 for displaying the operation status of the terminal, a speech key 14 for entering an operation command on speech and related services, an end key 16 for entering a command to end speech and a power on/off command, and a QWERTY keyboard 20 for entering numerals, characters, and signs.

Although not shown in the drawing, the portable terminal may include keys for entering a command to adjust the volume of inputted/outputted sound, a command to move a cursor to indicate a specific character, numeral, sign, or icon from the information displayed on the screen 12, and a command to scroll a page of the displayed information.

As shown in the drawing, the QWERTY keyboard 20 of the portable terminal has a small overall size, compact keys are positioned with a narrow spacing among them, considering the portability of the terminal. Accordingly, when a specific key of the QWERTY keyboard 20 is to be pressed, other adjacent keys may be pressed together, or one of the adjacent keys may be pressed erroneously.

In addition, the QWERTY keyboard 20 of a conventional portable terminal is configured in such a manner that a key can be used to input either a character or a numeral, according to a chosen input mode, in consideration of the limitation in the number of keys.

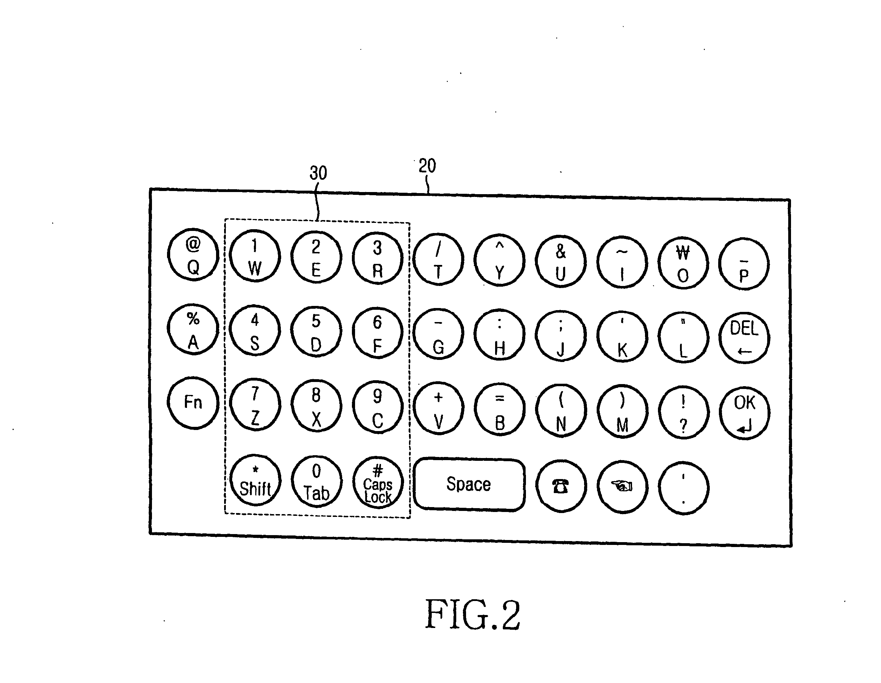

FIG. 2 shows in more detail the key structure of the QWERTY keyboard 20 of FIG. 1.

As shown in the drawing, each key of the QWERTY keyboard 20 can be used to input at least one numeral, character, or sign. The QWERTY keyboard 20 includes a space key for entering a command to move the cursor displayed on the screen 12, a telephone mode selection key 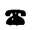 for making a call, and a direction key 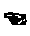 .

Each numeral/character combination key 30 of the keyboard is associated with a numeral, as well as with a character, and performs different functions according to the input mode. Particularly, the numeral/character combination keys 30 are used to input numerals (0, 1, 2, 3, 4, 5, 6, 7, 8, 9) and signs (*, #) in a numeral input mode and are used to input characters (W, E, R, S, D, F, Z, X, C) and to perform shift function, tab function, and caps lock function in a character input mode.

However, the numeral/character combination keys 30 of the QWERTY keyboard 20 have a compact size, as mentioned above, and it is difficult to correctly press a specific key as desired. In particular, if a user uses his finger, instead of a pointed device, to press a key, it may not be pressed correctly. Accordingly, key input errors occur frequently.

Accordingly, the present invention has been made to solve the above-mentioned problems occurring in the prior art. The Internet article "Get to know your Keyboard", retrieved from the URL: http://www.btinternet.com/~bill.furnel/qwerty.jpg discloses a keyboard for a personal computer comprising a multiplicity of keys. The keyboard contains groups of function keys, typewriter keys, "enter' keys, cursor control keys as well as a numeric keypad.

It is the object of the present invention to provide a key interface apparatus making it easier to choose a desired key correctly and a portable terminal adaptable to use the same.

This object is solved by the subject matter of the independent claims.

Preferred embodiments are defined by the subject matter of the dependent claims.

An aspect of the present invention is to provide a key interface apparatus having key values associated with input signals so that, in a numeral input mode, a desired numeral can be chosen correctly in an easier manner.

In order to accomplish the above, there is provided a key interface apparatus provided in a limited space of a compact device for entering numerals, characters, and signs, the apparatus including at least one key which is recognized as at least one identical key value according to a key input mode.

The keys, which are recognized as at least one identical key value, are preferably disposed adjacently to each other. When the key input mode is a mode for entering numerals, at least one key is recognized as a single numeral. The key interface apparatus is a QWERTY keyboard.

In accordance with another aspect of the present invention, there is provided a portable terminal including a key interface apparatus provided in a limited space for entering numerals, characters, and signs and a control unit adapted to recognize a key selection signal, which is inputted from at least one key, as an identical key value according to the key input mode of the key interface apparatus.

The portable terminal preferably further includes a storage unit having a mapping table which associated key values in such a manner that at least one key is recognized as an identical key value. The control unit then determines which key value corresponds to an inputted key selection signal with reference to the mapping table. The keys, which are recognized as an identical key value, are preferably disposed adjacently to each other.

According to the present invention, a plurality of adjacent keys are recognized as a single numeral, except for numeral keys which are not used in a conventional numeral input mode. This increases the input area for a specific numeral. Consequently, numerals can be easily entered even with keys arranged with a narrow spacing among them.

The above object and other aspects, features and advantages of the present invention will be more apparent from the following detailed description taken in conjunction with the accompanying drawings, in which:
FIG. 1 shows a conventional portable terminal having a QWERTY keyboard;
FIG. 2 shows in more detail the key structure of the QWERTY keyboard of FIG. 1;
FIG. 3 is a front view of a key interface apparatus according to an embodiment of the present invention showing the arrangement structure of keys which are recognized as an identical numeral value in a numeral input mode;
FIG. 4 is a block diagram of a portable terminal according to a preferred embodiment of the present invention, which has a QWERTY keyboard for recognizing numerals by means of corresponding blocks composed of a plurality of keys;
FIG. 5 shows in more detail a mapping table belonging to a storage unit shown in FIG. 4;
FIG. 6 is a flow chart showing a preferred embodiment of a key recognition method of a portable terminal using a key interface apparatus for easier key input according to the present invention; and
FIGs. 7 and 8 are flow charts showing in more detail a step of FIG. 6 for deciding which preset recognition value corresponds to an inputted key signal.

Hereinafter, preferred embodiments of the present invention will be described with reference to the accompanying drawings. It should be noted that the same components are given the same reference numerals throughout different drawings. Although specific features, e.g., circuit components, are provided in the following description of the present invention, it would be obvious to those skilled in the art that such features are only intended to help the understanding of the present invention, and the present invention can be realized without them. In addition, a detailed description of known functions and configurations incorporated herein will be omitted when it may make the subject matter of the present invention unclear.

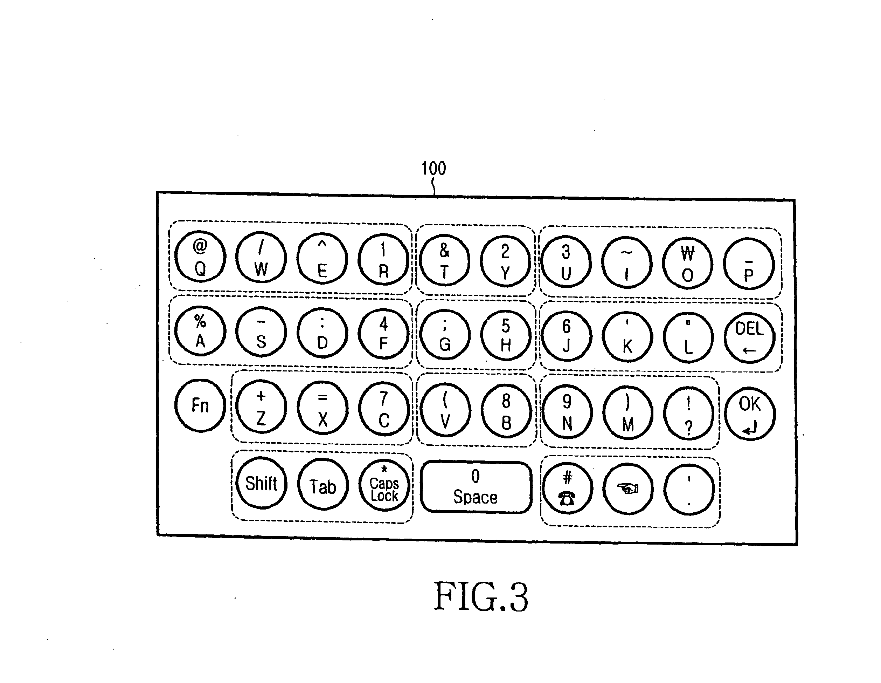

FIG. 3 is a front view of a key interface apparatus according to an embodiment of the present invention showing the arrangement structure of keys which are recognized as an identical numeral value in a numeral input mode. The present embodiment adopts a QWERTY keyboard as a key interface. As shown in the drawing, character and sign keys may be grouped into a block, which correspond to each numeral, and printed, so that numeral recognition values, which correspond to respective numerals, can be identified more easily.

In the present embodiment, a function key Fn, a delete key DEL for deleting entered characters or numerals, a confirmation key OK for entering a specific operation command or a dialing command using entered numbers, and the like, are used to perform existing functions, as mentioned above, separate from the keys associated with numeral recognition values.

When any key belonging to the same block is pressed in a numeral input mode, e.g., in a speech mode, the key interface apparatus always recognizes the same numeral, which is associated with the block, as an input. For example, when any key of Q, W, E, and R is pressed, numeral "1" is recognized as an input, and when any key of J, K, and L is pressed, numeral "2" is recognized as an input.

As such, a plurality of adjacent keys are recognized as a single numeral, except for numeral keys which are not used in a conventional numeral input mode. This increases the input area for a specific numeral. Consequently, numerals can be easily entered even with keys arranged with a narrow spacing among them.

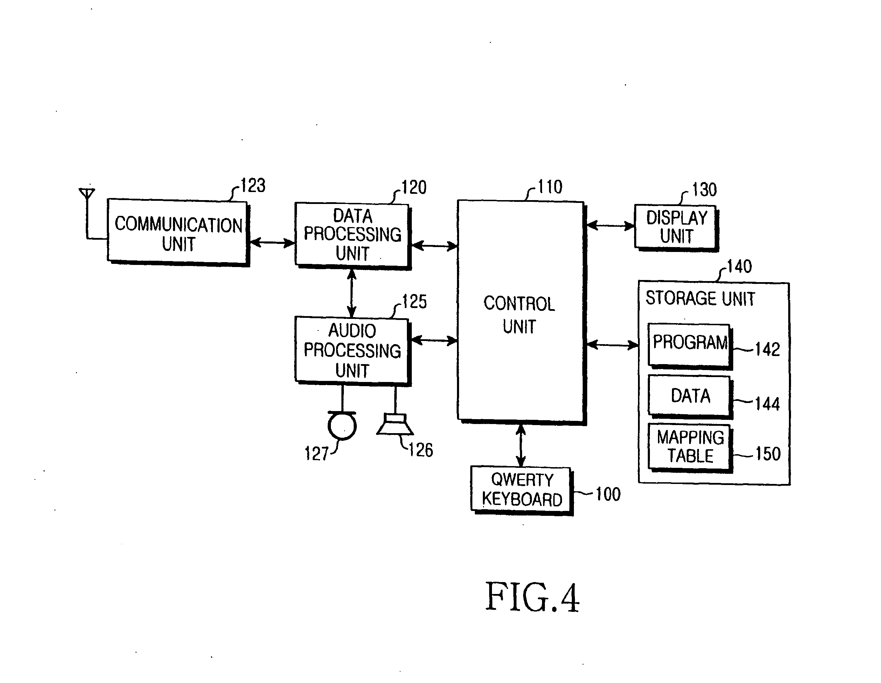

FIG. 4 is a block diagram of a portable terminal according to a preferred embodiment of the present invention, which has a QWERTY keyboard for recognizing numerals by means of corresponding blocks having a plurality of keys.

As shown in the drawing, a portable terminal includes a QWERTY keyboard 100 configured as shown in FIG. 3, a control unit 110, a data processing unit 120, a communication unit 123, an audio processing unit 125, a speaker 126, a microphone 127, a display unit 130, and a storage unit 140.

The control unit 110 takes the overall control of the portable terminal. If a signal regarding the selection of a key is inputted from the QWERTY keyboard 100, which is configured as an input interface of the portable terminal in the present embodiment, the control unit 110 performs preset operations in response to the inputted selection signal. The data processing unit 120 modulates or demodulates transmitted/ received data under the control of the control unit 110. The communication unit 123 converts data, which is received via an antenna, into a predetermined frequency band and outputs it to the data processing unit 120. The communication unit 123 also converts data, which is entered from the data processing unit 120, into a frequency band for radio transmission via the antenna.

The audio processing unit 125 converts audio data, which is output from the data processing unit 120, into audible sound and outputs it via the speaker 126 under the control of the control unit 110. The audio processing unit 125 also converts audio signals, which are inputted from the microphone 127, into data and outputs it to the control unit 110.

The display unit 130 displays various messages and information on the operation status of the portable terminal, under the control of the control unit 110. Particularly, the display unit 130 displays numerals, characters, and signs, which correspond to the respective numeral, character, and sign keys in the QWERTY keyboard 100, under the control of the control unit 110.

The QWERTY keyboard 100 has a key arrangement structure as shown in FIG. 3, wherein a plurality of keys are recognized as a single numeral for easier selection of numerals.

The storage unit 140 stores program data 142 necessary for controlling the operation of the portable terminal, as well as data 144 created when the control is performed or when a user uses the portable terminal. In particular, the storage unit 140 has a mapping table 150 so that at least one key of the QWERTY keyboard 100 is grouped into a block, and, when any key belonging to the same block is pressed in a numeral input mode (e.g., a speech mode), the same numeral or sign (*, #), which is associated with the block, is recognized as an input.

Accordingly, when a user wants to input a numeral, any key belonging to the same block, which corresponds to the desired numeral, causes that numeral to be displayed as the key is pressed. This makes it easier to select desired numerals.

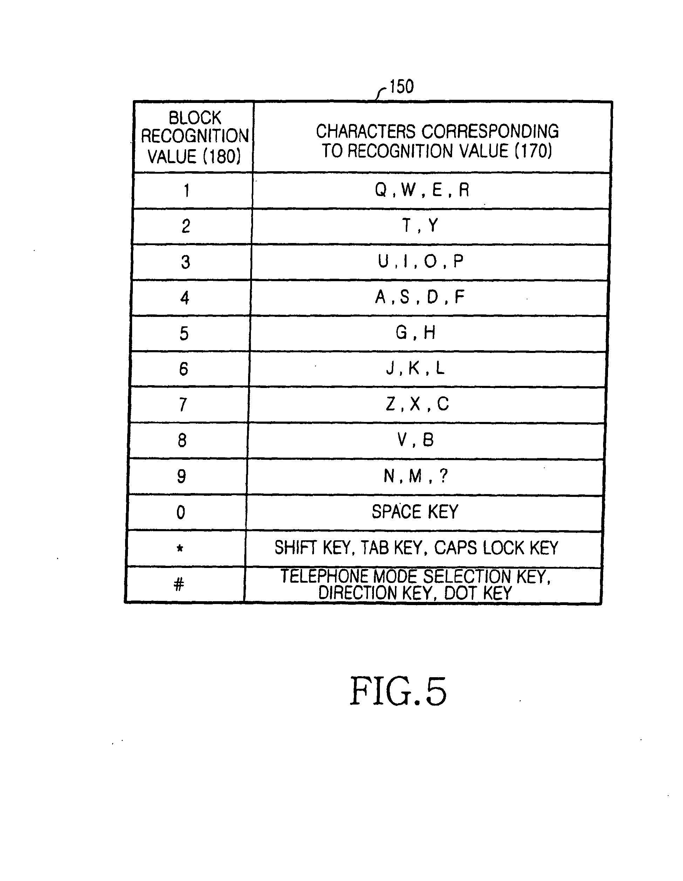

FIG. 5 shows in more detail a mapping table 150 belonging to the storage unit 140 of FIG. 4. As shown in the drawing, the mapping table 150 includes preset block recognition values 180 and character keys 170 corresponding to them. In other words, the character keys 170 are grouped according to corresponding blocks.

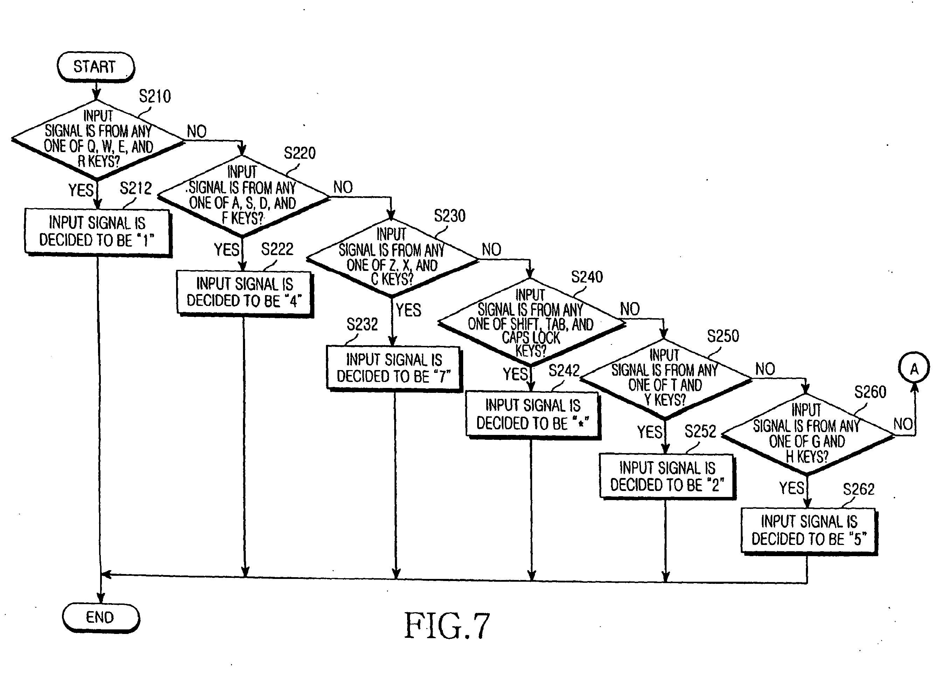

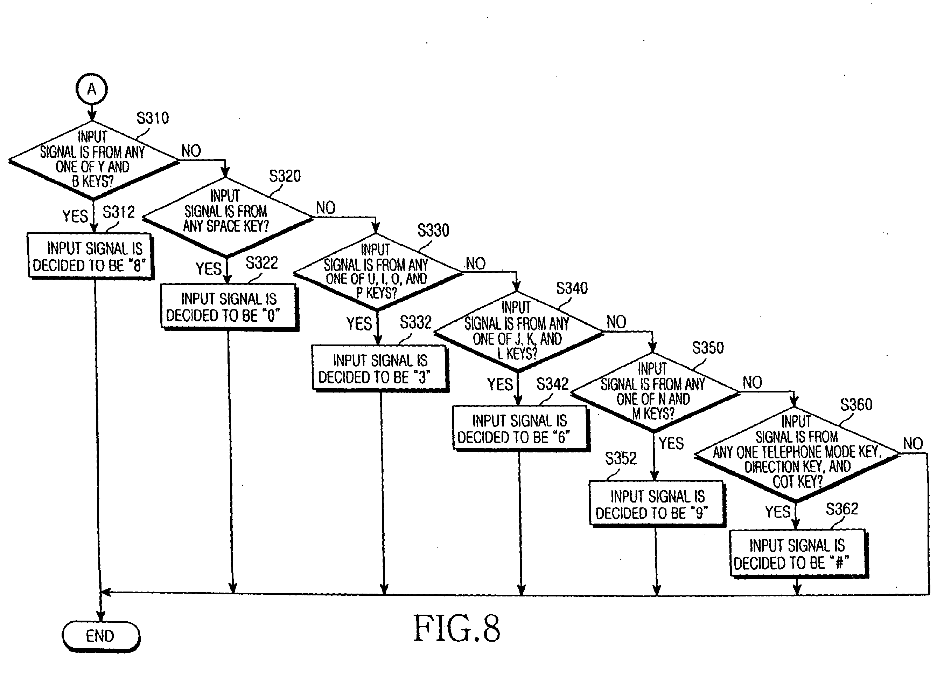

More specifically, Q, W, E, and R keys are grouped into a block and, when any key of Q, W, E, and R are pressed, numeral "1" is determined as an input. The block recognition values and corresponding keys will be described later with reference to FIGs. 7 and 8.

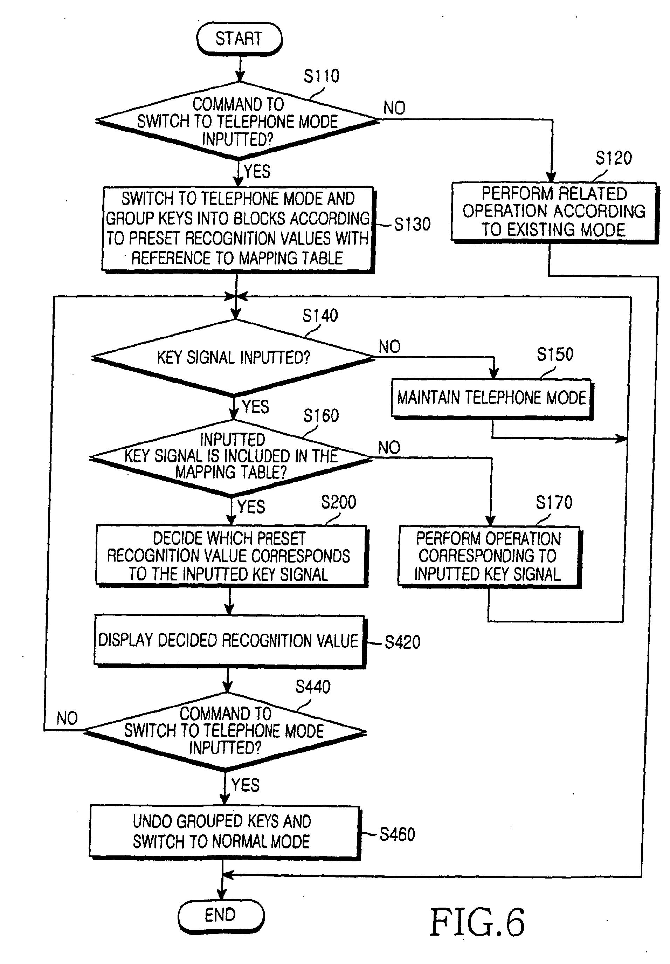

FIG. 6 is a flow chart showing a preferred embodiment of a key recognition method of a portable terminal using a key interface apparatus for easier key input according to the present invention.

Firstly, a control unit 110 determines whether a command to switch the portable terminal to a telephone mode is entered from a QWERTY keyboard 100 at step S110. If it is determined that no command was entered, the control unit 110 performs operations which have been performed, or which is to be performed, according to a preset mode at step S 120.

If it is determined that a command to switch to a telephone mode is entered, the control unit 110 switches the operation mode of the portable terminal to a telephone mode and groups the keys of the QWERTY keyboard 110 into groups with reference to a mapping table 150, according to preset recognition values at step S 130.

The control unit 110 determines, as keys are pressed, whether a key signal is inputted from the QWERTY keyboard 100 at step S140. If it is determined that no key signal is entered, the control unit 110 maintains the existing telephone mode and detects later input of a key signal from the QWERTY keyboard 100 at step S150.

If it is determined that a key signal is inputted, the control unit 110 determines whether the inputted key signal is a signal value corresponding to a key included in the mapping table 150 at step S160. If it is determined that the inputted key signal is not a signal value included and preset in the mapping table 150, the control unit 110 performs operations corresponding to the inputted key signal and detects later input of a key signal at step S 170. If it is determined that the inputted key signal is a signal value included and preset in the mapping table 150, the control unit 110 decides which preset block recognition value corresponds to the inputted key signal at step S200. The control unit 110 then displays the decided recognition value through a display unit 130 at step S420. After displaying the recognition value, the control unit 110 determines whether a command to end the telephone mode is entered at step S440.

If it is determined that a command to end the telephone mode is not entered, the control unit 110 repeats the steps S 140 to S420. If it is determined that a command to end the telephone mode is entered, the control unit 110 undoes the blocking of keys and switches the operation mode of the portable terminal to a normal mode at step S460.

FIGs. 7 and 8 are flow charts showing in more detail a step S200 of FIG. 6 for deciding which preset recognition value corresponds to an inputted key signal.

Firstly, the control unit 110 determines whether the inputted key signal is from any one of Q, W, E, and R keys at step S210. If it is determined that the inputted signal is from any one of Q, W, E, and R keys, the control unit 110 decides that the inputted key signal is "1"at step S212. If it is determined that the inputted signal is not from at least one of Q, W, E, and R keys, the control unit 110 determines whether the inputted key signal is from any one of A, S, D, and F keys at step S220. If it is determined that the inputted signal is from any one of A, S, D, and F keys, the control unit 110 decides that the inputted key signal is "4" at step S222.

If it is determined that the inputted signal is not from at least one of A, S, D, and F keys, the control unit 110 determines whether the inputted key signal is any one from Z, X, and C keys at step S230. If it is determined that the inputted key signal is from any one of Z, X, and C keys, the control unit 110 decides that the inputted key signal is "7"at step S232.

If it is determined that the inputted key signal is not from at least one of Z, X, and C keys, the control unit 110 determines whether the inputted key signal is any one from shift, tab, and cap lock keys at step S240. If it is determined that the inputted key signal is from any one of shift, tab, and cap lock keys, the control unit 110 decides that the inputted key signal is "*" at step S242.

If it is determined that the inputted key signal is not from at least one of shift, tab, and cap lock keys, the control unit 110 determines whether the inputted key signal is any one from T and Y keys at step S250. If it is determined that the inputted key signal is from any one of T and Y keys, the control unit 110 decides that the inputted key signal is "2" at step S252.

If it is determined that the inputted key signal is not from at least one of T and Y keys, the control unit 110 determines whether the inputted key signal is any one from G and H keys at step S260. If it is determined that the inputted key signal is from any one of G and H keys, the control unit 110 decides that the inputted key signal is "5" at step S262.

If it is determined that the inputted key signal is not from at least one of G and H keys, the control unit 110 determines whether the inputted key signal is any one from V and B keys at step S310. If it is determined that the inputted key signal is from any one of V and B keys, the control unit 110 decides that the inputted key signal is "8" at step S312.

If it is determined that the inputted key signal is not from at least one of V and B keys, the control unit 110 determines whether the inputted key signal is from space key at step S320. If it is determined that the inputted key signal is from space key, the control unit 110 decides that the inputted key signal is "0" at step S322.

If it is determined that the inputted key signal is not from space key, the control unit 110 determines whether the inputted key signal is from any one of U, I, O, and P keys at step S330. If it is determined that the inputted key signal is from any one of U, I, O, and P keys, the control unit 110 decides that the inputted key signal is "3" at step S332.

If it is determined that the inputted key signal is not from any one of U, I, O and P keys, the control unit 110 determines whether the inputted key signal is from any one of J, K, and L keys at step S340. If it is determined that the inputted key signal is from any one of J, K, and L keys, the control unit 110 decides that the inputted key signal is "6" at step S342.

If it is determined that the inputted key signal is not from any one of J, K, and L keys, the control unit 110 determines whether the inputted key signal is from any one of N and M at step S350. If it is determined that the inputted key signal is from any one of N and M keys, the control unit 110 decides that the inputted key signal is "9" at step S352.

If it is determined that the inputted key signal is not from any one of N and M keys, the control unit 110 determines whether the inputted key signal is from any one of telephone mode key, direction key, and dot (.) key at step S360. If it is determined that the inputted key signal is from any one of telephone mode key, direction key, and dot key, the control unit 110 decides that the inputted key signal is "#" at step S362.

According to the present invention, a plurality of adjacent keys are recognized as a single numeral, except for numeral keys which are not used in a conventional numeral input mode. This increases the input area for a specific numeral. Consequently, numerals can be entered easily even with keys arranged with a narrow spacing among them.

While the invention has been shown and described with reference to certain preferred embodiments thereof, it will be understood by those skilled in the art that various changes in form and details may be made therein without departing from the scope of the invention as defined by the appended claims.

## Claims

1. A key interface apparatus (100) of an electronic device, the apparatus comprising at least two keys which are adapted to be recognized as an identical key value according to a key input mode
**characterized in that**,
the at least two keys recognized as an identical key value are disposed adjacent to each other, and
the at least two keys are adapted to be recognized as a single numeral when the key input mode is a mode for entering numerals.

2. The key interface apparatus as claimed in claim 1, wherein the key interface apparatus is a QWERTY keyboard.

3. An electronic device, comprising:
a key interface apparatus (100);
a control unit (110) adapted to recognize a key selection signal as a key value which is identical to a key value of another key selection signal according to a key input mode of the key interface apparatus (100);
a storage unit (140) having a mapping table which associates key values,
wherein at least two keys are adapted to be recognized as having an identical key value, and wherein the control unit (110) is adapted to determine which key value corresponds to an inputted key selection signal with reference to the mapping table (150);
wherein the at least two keys recognized as having an identical key value are disposed adjacently to each other, and
wherein the at least two keys are adapted to be recognized as a single numeral when the key input mode is a mode for entering numerals.

4. The electronic device as claimed in claim 3, wherein the key interface apparatus (100) is a QWERTY keyboard.

## Patentansprüche

1. Tastenschnittstellenvorrichtung (100) eines elektronischen Gerätes, wobei die Vorrichtung mindestens zwei Tasten umfasst, welche eingerichtet sind, um als ein identischer Tastenwert gemäß eines Tasteneingabemodus erkannt zu werden
**dadurch gekennzeichnet, dass**
die mindestens zwei Tasten, welche als ein identischer Tastenwert erkannt werden, nebeneinander angeordnet sind, und
die mindestens zwei Tasten eingerichtet sind, um als eine einzige Zahl erkannt zu werden, wenn der Tasteneingabemodus ein Modus für die Eingabe von Zahlen ist.

2. Tastenschnittstellenvorrichtung nach Anspruch 1, wobei die Tastenschnittstellenvorrichtung eine QWERTY-Tastatur ist.

3. Elektronisches Gerät, umfassend:
eine Tastenschnittstellenvorrichtung (100);
eine Steuerungseinrichtung (110), welche eingerichtet ist, um ein Tastenauswahlsignal als einen Tastenwert, welcher identisch mit einem Tastenwert eines anderen Tastenauswahlsignals gemäß eines Tasteneingabemodus der Tastenschnittstellenvorrichtung (100) ist, zu erkennen;
eine Speichereinrichtung (140), welche über eine Zuordnungstabelle verfügt, welche Tastenwerte zuordnet,
wobei mindestens zwei Tasten eingerichtet sind, um als über einen identischen Tastenwert verfügend erkannt zu werden, und wobei die Steuerungseinrichtung (110) eingerichtet ist, um festzustellen, welcher Tastenwert einem eingegebenen Tastenauswahlsignal in Bezug auf die Zuordnungstabelle (150) entspricht;
wobei die mindestens zwei Tasten, welche als über einen identischen Tastenwert verfügend erkannt werden, nebeneinander angeordnet sind; und
wobei die mindestens zwei Tasten eingerichtet sind, um als eine einzige Zahl erkannt zu werden, wenn der Tasteneingabemodus ein Modus für die Eingabe von Zahlen ist.

4. Elektronisches Gerät nach Anspruch 3, wobei die Tastenschnittstellenvorrichtung (100) eine QWERTY-Tastatur ist.

## Revendications

1. Appareil d'interface à touches (100) d'un dispositif électronique, l'appareil comprenant au moins deux touches qui sont conçues pour être reconnues comme une valeur identique de touche selon un mode d'entrée des touches,
**caractérisé en ce que** lesdites au moins deux touches reconnues comme une valeur de touche identique sont disposées adjacentes l'une à l'autre et lesdites au moins deux touches sont conçues pour être reconnues comme un chiffre unique lorsque le mode d'entrée des touches est un mode de saisie de chiffres.

2. Appareil d'interface à touches selon la revendication 1, dans lequel l'appareil d'interface à touches est un clavier QWERTY.

3. Dispositif électronique comprenant :
un appareil d'interface à touches (100) ;
une unité de commande (110) conçue pour reconnaître un signal de sélection de touche comme une valeur de touche qui est identique à une valeur de touche d'un autre signal de sélection de touche, en fonction d'un mode d'entrée des touches de l'appareil d'interface à touches (100) ;
une unité de stockage (140) ayant une table de mappage qui associe des valeurs de touche,
dans lequel au moins deux touches sont conçues pour être reconnues comme ayant une valeur identique de touche et dans lequel l'unité de commande (110) est conçue pour déterminer quelle valeur de touche correspond à un signal de sélection de touche reçu en entrée, en se référant à la table de mappage (150) ;
dans lequel lesdites au moins deux touches reconnues comme ayant une valeur identique sont disposées adjacentes l'une à l'autre ; et
dans lequel lesdites au moins deux touches sont conçues pour être reconnues comme un chiffre unique lorsque le mode d'entrée des touches est un mode de saisie de chiffres.

4. Dispositif électronique selon la revendication 3, dans lequel l'appareil d'interface à touches (100) est un clavier QWERTY.
